# EUROPÄISCHE PATENTSCHRIFT

(11) **EP 0 362 737 B1**
(45) Veröffentlichungstag und Bekanntmachung des Hinweises auf die Patenterteilung: **18.05.1994**
(21) Anmeldenummer: 89118159.6
(22) Anmeldetag: 30.09.1989
(51) Int. Cl.: H04N 1/10, H04N 7/14

(54) **Gerät und Verfahren für das Umwandeln von Bildern oder Abbildern in Videosignale**
Apparatus and method for converting pictures in video signals
Appareil et procédé pour convertir des images en signaux vidéo

(30) Priorität: 06.06.1989 CH 2124/89; 23.03.1989 DE 3909665; 05.10.1988 DE 8812552 U; 01.02.1989 DE 8901098 U
(43) Veröffentlichungstag der Anmeldung: 11.04.1990
(73) Patentinhaber: Josef Wolf Audio-Visuals, A-6840 Götzis (AT)
(72) Erfinder: Wolf, Josef, A-6800 Feldkirch (AT); Stuettler, Herbert, A-6830 Rankweil (AT); Held, Wolfgang, A-6971 Hard (AT); Mai, Max, Dipl.-Ing., D-8070 Ingolstadt (DE)
(74) Vertreter: Büchel, Kurt F., Dr.

(56) Entgegenhaltungen:
- WO-A-81/00944
- GB-A- 1 572 151
- US-A- 3 816 654

## Beschreibung

Die Erfindung betrifft ein Gerät für das Umwandeln von Bildern oder Abbildern in Videosignale nach dem Oberbegriff des Anspruches 1 und ein Verfahren für das Umwandeln von Bildern oder Abbildern in Videosignale nach dem Oberbegriff des Anspruches 14. Unter dem Begriff "Bildern oder Abbildern" sind dabei sowohl Bilder im herkömmlichen Sinn, wie Fotografien, Diapositive, Zeichnungen usw., aber auch sonstige Informationsaufzeichnungen, wie Textseiten, Schriftstücke usw., aber auch lebende oder tote Objekte zu verstehen.

Üblicherweise verfügen solche bekannten Geräte über ein Gehäuse, eine Videokamera mit einem Objektiv und eine Lichtquelle, die zumeist in Form mehrerer Lampen auf flexiblen Trägern befestigt sind und zur Beleuchtung des Bildes oder Objektes dienen, wobei der Videokamera bei einem bekannten Gerät ein Spiegel zur Umlenkung des Strahlenganges in die Videokamera vorgeschaltet ist. Dadurch kann die Kamera nach oben gerichtet sein, und es wird an Bauhöhe gespart. Eine Lichtquelle im Sinne der Erfindung erzeugt zum überwiegenden Teil sichtbares Licht.

Durch die bekannten Geräte werden somit Bilder von einer Videokamera aufgezeichnet, um dann auf einem Bildschirm wiedergegeben bzw. aufgezeichnet oder sonst wie bekannt weiterverarbeitet zu werden.

Nachteilig ist dass die bekannten Geräte nur eine geringe Tiefenschärfe aufweisen. Ausserdem ist die Beleuchtung zumeist sehr schwierig einzustellen, so dass häufig eine Spiegelung am Bild oder eine Schattenbildung auftritt, die die Wiedergabe stört. Die Erhitzung der Lampen führt zudem zu Bedienungsnachteilen; das Berühren der Lampen kann zu Verbrennungen führen. Das Orientieren der Videokamera auf eine gewünschte Stelle im Bild, sowie dessen Verkleinerung oder Vergrösserung, ist schwierig, so dass bei verschiedenen bekannten Geräten Orientierungshilfen, wie Leuchtstrahlen o.dgl. auf das Bild geworfen werden müssen, um die Orientierung z.B. auf Landkarten zu ermöglichen und die Lampen zur Erzielung einer gleich starken Ausleuchtung ständig nachjustiert werden müssen. Dies bedeutet einen zusätzlichen Aufwand und ist nicht bedienerfreundlich.

In der GB-A-1572151 ist weiters ein Lese- und Displaygerät bekannt geworden, das für einen Fernsehsprecher ein Skriptum über eine Videokamera aufnimmt und in einem Monitor dem Fernsehsprecher zuspielt. Das Aufnahmegerät verfügt dabei über eine waagrecht eingebaute Videokamera, die über Umlenkspiegel auf das Skript gerichtet ist. Einfache Lampen beleuchten das Skript. Da der Strahlengang der Lampen völlig willkürlich und ohne spezielle Orientierung auf das Skript fällt, kann eine Bedienperson am Aufzeichnungsgerät nicht feststellen, welche Passage von der Videokamera tatsächlich gerade aufgenommen wird. Durch die Spiegelanordnung vor der Videokamera ist das tatsächliche Aktionsfeld für die Videoaufzeichnung auch sehr stark eingeschränkt. Bereiche seitlich des Gerätes können nicht aufgenommen werden. Das Projizieren von Durchlichtbildern oder dergleichen, die sodann durch die Videokamera aufgenommen werden sollen ist durch das Gerät ebenfalls nicht möglich.

Bei einer weiteren bekannten Konstruktion nach der US-A-3816654 ist das Projizieren eines Durchlichtbildes oder eines scharf fokussierten Lichtstrahles mit weissem Licht auch nicht möglich. Durch die dem Gerät nach der US-PS vorgesehene Kamera können daher ausschliesslich Gegenstände, Schriftstücke oder Personen aufgenommen werden, die durch einen nicht fokussierbaren Infrarot-Lichtstrahl angestrahlt werden. Sowohl der Infrarotlichtstrahl als auch der Sehstrahl der Kamera werden über je einen Spiegel umgelenkt, wodurch sich der Abstand zum Betrachtungsobjekt nur unwesentlich vergrössern lässt. Für die Hauptanwendung des Gerätes nach der US-PS ist dies jedoch kein Nachteil, da im Regelfall dieses Gerät ja für eine Gegensprechanlage zum Einsatz kommen soll, wo in der Regel die aufzunehmende Person sich stets in einem gewünschten bestimmten Abstand zur Kamera befindet. Für eine gute Abbildung von Dokumenten, Farbfotos oder dergleichen wird das in der US-A-3816654 vorgesehe Infrarotlicht jedoch nicht ausreichen. Durch den relativ grossen Winkel zwischen den Sehstrahlen der Videokamera und den Infrarotlichtstrahlen der Leuchtdioden ergibt sich vermutlich darüber hinaus bei der versuchten Aufzeichnung von Gegenständen eine unerwünschte Schattenbildung.
Die Erfindung stellt sich daher die Aufgabe, ein verbessertes Gerät zu schaffen, das die oben erwähnten Nachteile nicht aufweist und bedienerfreundlich ist. Ausserdem sollen beliebige Bildausschnitte wählbar sein, die automatisch mit der Erfassung durch die Videokamera auch optimal beleuchtet sein sollen. Eine Bedienperson soll direkt am Bild erkennen können, welcher Ausschnitt durch die Videokamera erfasst ist. Die Tiefenschärfe soll so gross sein, dass auch Gegenstände scharf abgebildet werden können.

Diese Aufgabe wird erfindungsgemäss durch die Kombination der Merkmale des Kennzeichens der Ansprüche 1 und 2 bzw. durch die Kombination der Verfahrensschritte des Anspruches 14 erstmals in zufriedenstellender Weise gelöst. Vorteilhafte Weiterbildungen der Erfindung sind in den Kennzeichen der Unteransprüche beschrieben.

Das zweite Objektiv dient analog dem Objektiv der Kamera zur Fokussierung der Lichtstrahlen, allerdings in einem zweiten Strahlengang,der sich mit dem Strahlengang der Kamera schneidet. Unter Schneiden im Sinne der Erfindung ist auch ein Kreuzen in einem geringem Abstand zueinander gemeint, wobei das Gerät am besten funktioniert, wenn sich die Mittelstrahlen im Bereich des Bildes oder Gegenstandes schneiden. Dadurch ist eine optimale Beleuchtung des Bildes oder Gegenstandes gewährleistet. Unter Projektionsfläche ist dabei jene Fläche zu verstehen, auf die die Lichtstrahlen mit oder ohne eigenem Bildinhalt projiziert werden, die durch Verschwenken des zweiten Spiegels willkürlich gewählt werden kann und von der das Bild bzw. Abbild durch die Videokamera aufgenommen wird. Sie kann sich am oder neben dem Gehäuse befinden, z.B auf einer Tisch- oder Wandoberfläche, oder aber von der Oberfläche eines beliebigen lebenden oder toten Objektes gebildet sein.

Das Auffinden einer bestimmten Stelle einer Projektionsfläche mit der Kamera erfolgt damit gewissermassen automatisch durch Verschwenken des zweiten Spiegels, der für eine Bedienperson deutlich sichtbar gleichzeitig den Lichtstrahl auf eben diese Stelle lenkt. Die. Person orientiert den Aufnahmeort der Kamera also unwillkürlich durch das Orientieren des Lichtstrahles auf eine bestimmte Stelle an der Projektionsfläche. Dabei bewirkt die Spiegelkombination aus erstem und zweitem Spiegel gleichzeitig eine Verlängerung des Lichtweges von dem Bild zu den Objektiven, wodurch eine gute Tiefenschärfe erzielt werden kann, was sonst nur durch überlange Objektive möglich ist. Ab ca. 90 cm Lichtweg entspricht die Tiefenschärfe den häufigsten Anforderungen.

Weitere Aufgaben werden durch die Merkmale der Unteransprüche gelöst und bei deren Erläuterung besprochen. Es ergeben sich daraus unterschiedliche Vorteile und verbesserte oder neue Anwendungsmöglichkeiten.

Durch die Wahl des Schnittpunktes im Bereich der Projektionsfläche ergibt sich eine optimale Deckung der Querschnitte der beiden Strahlengänge auf der Projektionsfläche, wodurch auch die Lichtfläche mit der Aufzeichnungsfläche durch die Kamera zusammenfällt. Der Winkel zwischen den Mittelstrahlen von vorzugsweise weniger als 5°, insbesondere weniger als 2°, erzeugt die beste Ausleuchtung mit geringstem Energieaufwand, wobei auch schon ein Winkel von ca. 1,5° erfolgreich angewendet wurde. Die Gleichheit der Objektive sichert diese guten Effekte auch bei unterschiedlichen Objektiveinstellungen. Durch geeignete Umlenkonstruktionen für die Lichtstrahlen ist es im Sinne der Efindung auch möglich, nur ein einziges Objektiv vorzusehen, durch das die beiden Mittelstrahlen gelenkt werden.

Ein drittes Objektiv erhöht die Unabhängigkeit des Querschnittes des zweiten Strahlenganges an seinem Beginn von dem des ersten Strahlenganges, der auf das Aufzeichnungselement, zB. ein CCD, ausgelegt ist; die Abbildungskongruenz kann dadurch in vorteilhafter Weise beeinflusst werden. Entgegen den bekannten Techniken bei Projektoren wird das Projektionsbild z.B. eines Dias zuerst verkleinert. Die Wahl beliebig entfernter Projektionsflächen kann dadurch, trotz vorfokussiertem zweiten Objektiv, bei gleichbleibender Abbildungsschärfe sichergestellt werden. Das projizierte Licht wird vollständig auf das aufzunehmende Bild gerichtet. Darüber hinaus können Ungenauigkeiten bei allfälligen Diapositiven (siehe Anspruch 11) korrigiert werden, ohne die Stellung des Zoomobjektivs verändern zu müssen, dessen Fokus beispielsweise auf eine fixe Entfernung, z.B. auf die Oberseite des Gehäuses, bei einem gebauten Gerät im Abstand von 1,3m, eingestellt ist. In der Normalstellung wird der Abstand zwischen dem Zwischenbild des dritten Objektives und dem zweiten Objektiv dem Auflagemass der Videokamera entsprechen. Diese Vorteile werden insbesondere durch die Merkmale des Anspruches 5 noch unterstrichen, wobei die Zoomobjektive das Vergrössern von einzelnen Bildausschnitten erleichtern. Ein Lichtverstärker kann bei schwachen Lichtausbeuten aus der Lichtquelle eine verbesserte Aufnahmequalität erzielen, was insbesondere bei der Variante nach Anspruch 11 mit dem Fernsehprojektor von Bedeutung sein kann. Das Vorschalten einer Blende für das Auswählen eines Bildausschnittes ist eine billigere, jedoch stromintensivere Variante zur Wahl einer guten Abbildungskongruenz.

Die erfindungsgemässe Verwendung von synchronisierten Zoomobjektiven stellt die Abbildungskongruenz auch bei verschiedensten Bildausschnitten sicher und erhöht insbesondere bei Fernsteuerung die Bedienerfreundlichkeit des Gerätes. Derselbe Effekt tritt natürlich auch bei der Verwendung eines einzigen Objektives auf. Das Verwenden eines Zahnradgetriebes mit einem Umlenkzahnrad spart an Bauteilen, Motoren und Steuerungen bei grosser Betriebssicherheit.

Das erste Merkmal des Anspruches 7 erlaubt verschiedene zusätzliche Effekte, wie z.B. das Heraussuchen von beliebigen Stellen an einer grösseren beleuchteten Projektionsfläche, wobei in einem solchen Fall die beiden Zoomobjektive getrennt voneinander betreibbar sein sollten. Ausserdem kann dadurch auch bei beliebigen Entfernungen der Projektionsfläche von den Objektiven der Schnittpunkt bzw. der Winkel zwischen den beiden Mittelstrahlen justiert werden, so dass er jeweils in der Ebene der Projektionsfläche zu liegen kommt, was die seitliche Abbildungskongruenz fördert. Das dreidimensionale Verstellen des bzw. der Spiegel ermöglicht auch das Verlagern der Projektionsfläche fast verzerrungsfrei an beliebige Orte ausserhalb des Gehäuses bis in die Nähe einer 45 Grad Ebene zur Ebene des ersten Spiegels durch den Befestigungsort des zweiten Spiegels; darüber hinaus ergibt sich allerdings eine zunehmende Verzerrung.

Eine Autofokuseinrichtung und/oder eine Autoiriseinrichtung dienen zur benutzerfreundlichen Aufnahmesteuerung der Videokamera. Ein mitgeführter dritter Strahlengang kann für die verschiedensten Anwendungen vorgesehen werden, so zB. in Verbindung mit einer Steuereinheit für das Messen von bestimmten Zuständen im Bereich der Projektionsfläche und/oder für das Steuern der Objektive und/oder der Lichtquelle, wie Fokussierung, Entfernungsmessung, Hell/Dunkel-Überwachung usw.

Die Variante nach Anspruch 9 mit der Steuereinheit erleichtert die Helligkeitssteuerung der Videokamera, wobei die Auswerte- und die Steuereinheit für das Anpassen der Iriseinstellung an eine veränderte Objektiveinstellung vorgesehen sind. Der Rechner vergleicht die ermittelten Istwerte der Auswertesteuerung mit den vorgegebenen Normalwerten für die Kamera, ermittelt derart die Prozentualwerte von Über- oder Unterbelichtung und sorgt in der Folge für das Beibehalten von den bestimmten Über- oder Unterbelichtungswerten an der Projektionsfläche. Dadurch können subjektiv gewählte Helligkeitsvarianten auch bei vergrösserten oder verkleinerten Bildausschnitten beibehalten werden. Dies ist bei üblichen Autoiriseinrichtungen nicht der Fall, da diese sofort nach der Einstellung eines neugezoomten Bildausschnittes den Normwert der Helligkeit für die Kamera suchen.

Die Variante mit einem Triggermechanismus für das - gegebenenfalls verzögerte - Abschalten der Lichtquelle oder für das automatische Verschwenken eines der Spiegel stellt eine Art Sicherungseinrichtung zum Schutz der Videokamera bzw. des CCD-Elementes dar und soll verhindern, dass das mutwillige oder unabsichtliche Einstrahlen des zweiten Strahlenganges direkt in den ersten Strahlengang zu einer Beschädigung des CCD-Elementes führt. Eine Überbelichtung führt also zum Abschalten der Lichtquelle.

Das Einschalten eines durchleuchtbaren Bildträgers und/oder eines Filters dient der Konditionierung des Inhaltes des zweiten Strahlenganges, der an sich in vielen Fällen lediglich einen weissen Lichtstrahl beinhaltet, um einen Gegenstand oder ein Bild auf einer Projektionsfläche zu beleuchten. Als Bildträger sind Diapositive, Filme, Durchlicht-LCDs usw. zu verstehen.

Das Übertragen eines Bildes von einem Bildträger auf eine Projektionsfläche ermöglicht jedem Benutzer, dieses Bild auf der Projektionsfläche zu variieren, indem er beispielsweise mit einem Zeigestab Hinweise gibt, oder indem er auf der Projektionsfläche selbst oder einem Papier oder einer Transparentfolie im Projektionsbereich des zweiten Strahlenganges Zeichnungen anfertigt, die sich somit mit dem projizierten Bild decken. Das "Malen" auf Bildträgern - ohne die Bildträger tatsächlich zu verändern - ist somit einzig bei der Erfindung möglich.

Ist jedoch die Lichtquelle als Fernsehprojektor ausgebildet, so können auch beliebige Videobilder oder z.B. Computerbildschirme projiziert, verändert oder dokumentiert und wiedergegeben werden. Bei Bedarf könnten sogar Mehrfachüberlagerungen vorgenommen werden, so dass die neu aufzuzeichnenden Bilder eine Kombination zB. eines Fernsehbildes mit einem Diapositiv und mit einer handschriftlichen Eintragung darstellen. In einem solchen Fall wird jedoch ein Restlichtverstärker zwischengeschaltet, um die Aufzeichnungshelligkeit sicherzustellen. Eventuell kann auch eine zusätzliche Linse vorgeschaltet werden, um alle Bilder scharf zu fokussieren.

Beim Verwenden der Lichtquelle als externes Zusatzgerät ausserhalb des Gehäuses ergibt sich der Vorteil der Auswahl verschiedenster Geräten dafür. Der Umlenkspiegel für das Orientieren des zweiten Strahlenganges kann beispielsweise auch als halbdurchlässiger Spiegel oder als Prisma ausgeführt sein, sodass auch diese Variante zusätzlich zu den oben beschriebenen gewählt werden kann. Ein solcher Umlenkspiegel kann aber auch bei einer integrierten Lichtquelle vorgesehen und als IR-durchlässiger Spiegel ausgebildet sein, um die Wärmestrahlung zu vermindern, die insbesondere beim dritten Objektiv zu lokaler Erwärmung führen kann. Diverse Filter dienen zur Einfärbung des Lichtstrahles oder zur Reduzierung der IR- oder der UVStrahlung.

Die Variante nach Anspruch 10 baut kompakt und weist vom äusserlichen Aufbau her Ähnlichkeit mit herkömmlichen Hellraumprojektoren auf, wodurch sich Benutzer sehr schnell zurechtfinden. Die Videokamera, die Lichtquelle und der erste Spiegel sind dort auch gut geschützt. Die Projektionsfläche an der Oberseite des Gehäuses bietet sich als festlegbare Fläche an; darüber hinaus liegt sie direkt dem zweiten Spiegel gegenüber, wodurch am wenigsten Verzerrungen bei der Projektion auftreten. Die Austauschbarkeit der Platte mit zwei unterschiedlichen Reflexions-Oberflächen dient dem jeweils anzupassenden kontrastreichen Hintergrund für allfällige Projektionen oder für das Aufstellen von verschiedenen aufzunehmenden Gegenständen. Dazu dienen auch die färbigen Hintergrundtafeln, die z.B. auch aus färbigem Papier sein können.

Die Ausbildung nach dem letzten Merkmal des Anspruches 3 bietet schon mit herkömmlichen Zoomobjektiven eine gute Tiefenschärfe, sodass auch räumliche Gegenstände gut abgebildet werden können. In der Praxis wurden Geräte mit einem Abstand von 1 bzw. 1,3m gebaut, die hervorragende Tiefenschärfe zeigen. Bei herkömmlichen Geräten müsste mit umständlich zu wechselnden Nahlinsen gearbeitet werden.

Selbstverständlich kann ein erfindungsgemässes Gerät auch ausschliesslich als Aufnahmegerät - ohne eingeschalteter Lichtquelle - oder auch ausschliesslich als Projektionsgerät ohne eingeschalteter Videokamera betrieben werden. Im ersteren Fall könnten auch andere Aufzeichnungsgeräte als Videokameras zur Anwendung kommen z.B. Fotoapparate, Filmkameras usw.

Die Variante nach Anspruch 11 ergibt eine grosse Flexibilität und Vielfalt der Anwendungsmöglichkeiten des erfindungsgemässen Gerätes. Natürlich kann aber die Lichtquelle auch in an sich bekannter Weise als externes Zusatzgerät ausserhalb des Gehäuses anschliessbar sein, wobei dann aber vorzugsweise innerhalb des Gehäuses ein Umlenkspiegel für das Umlenken des zweiten Strahlenganges in das zweite Objektiv angeordnet ist.

Herkömmliche Bildtelefone werden durch die erfindungsgemässen Massnahmen des Anspruches 12 revolutioniert, indem es den Benutzern möglich ist, nicht nur sich selbst zu sehen, sondern während eines Telefonats auch Dokumente oder Gegenstände vorzeigen zu können, wobei es die letzten Merkmale des Anspruches 12 ausserdem auch ermöglichen, einem Benutzer zu zeigen, wie sein übertragenes Bild beim anderen Benutzer ankommt.

Die Merkmale des Anspruches 13 beschreiben ein besonders kompaktes Gerät, das durch Verschwenken des Monitors und/oder des Spiegels in eine geschützte, gut transportierbare Lage gebracht werden kann, wobei die Variante mit teiltransparentem Spiegel insbesondere bei Bildtelefonen den Benutzern bei optimaler blendfreier Beleuchtung ermöglicht, sich gewissermassen direkt in die Augen zu blicken.

Das Verfahren zur Aufzeichnung und/oder Wiedergabe eines Bildes über ein Videogerät nach Anspruch 14 wurde in etlichen Versuchen als gut praktikabel erkannt. Durch das Umlenken des ersten Strahles über den zweiten Spiegel ergibt sich eine vergrösserte Entfernung des Objektives von der Projektionsfläche wodurch eine gute Tiefenschärfe auch mit einfachen Objektiven besser erreicht wird. Das Erreichen des Schnittpunktes auf der Projektionsfläche führt zu einer optimalen Ausleuchtung und verhindert das Blenden der Kamera. Die Verfahrensschritte des Anspruches 15 zeigen Varianten mit möglichen Bildkombinationen, d.h. mit Möglichkeiten zur indirekten Beschriftung von z.B. Diapositiven auf. Das Einschnüren des Zwischenbildes dient dem Anpassen der Bildprojektion an die Bildaufnahme, so dass einfache handelsübliche, gleiche Objektive als erstes und zweites Objektiv verwendet werden können.

Anhand von Figuren wird die Erfindung beispielhaft näher erläutert. Es zeigen dabei
Fig.1 und 2 ein Gerät im Schrägriss;
Fig.3 einen Ausschnitt mit den Objektiven; und
Fig.4 eine Anordnung der Erfindung für ein Bildtelefon.

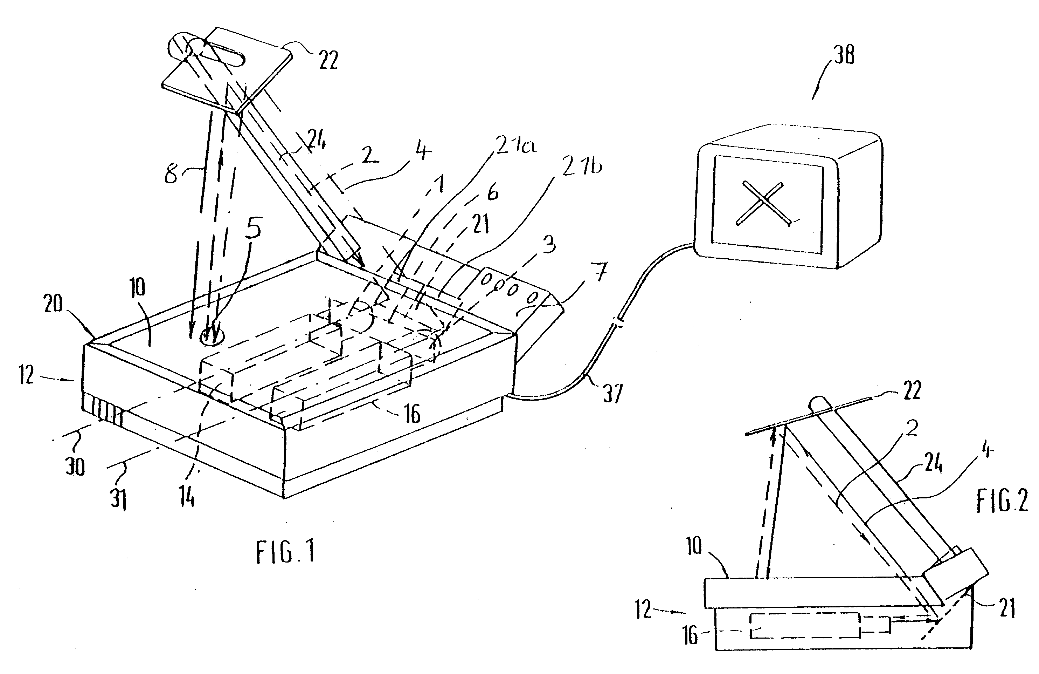

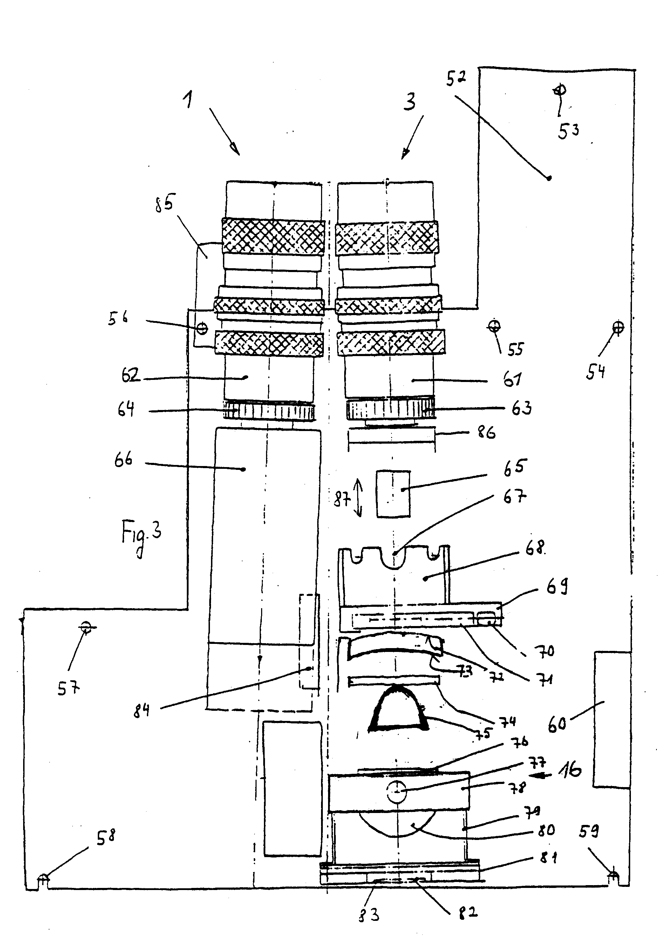

Die Fig.1 und 2 zeigen ein Gerät zur Aufzeichnung von Bildern von einer Projektionsfläche 10 mit einer in einem Gehäuse 12 untergebrachten Lichtquelle 16. Das Gehäuse 12 ist flachquaderförmig, und in ihm ist eine Kamera 14 untergebracht, die die auf der Projektionsfläche 10 dargestellten oder befindlichen Bilder bzw. Gegenstände aufnimmt. Die Lichtquelle 16 ist daher bezüglich des Lichtes ein Sender, während die Kamera 14 ein Empfänger ist. Man erkennt, dass die Deckseite 20 des Gehäuses 12 als Projektionsfläche ausgebildet ist und dass das vom Projektor 16 abgegebene Licht auf die Projektionsfläche 10 über ein aus den Spiegeln 21 und 22, die auch unterteilt sein können (z.B. 21a, 21b), bestehendes Spiegelsystem reflektiert wird. Wird nun der Projektor 16 als ein Diaprojektor verwendet, dann entsteht auf der Projektionsfläche 10 ein vergrössert dargestelltes Bild, das in das Objektiv der Kamera 14 über die Spiegel 22 und 21 gespiegelt wird. Wird auf eine Projektionsfläche ein Bild oder ein Gegenstand gelegt, dann wird der Projektor 16 als eine Beleuchtungseinrichtung verwendet. Das von der Vorlage reflektierte Licht kann dann der Kamera 14 über das Spiegelsystem zugeleitet werden. Der Spiegel 22 ist von einem mit dem Gehäuse 12 verbundenen Träger 24 getragen und um ein Kugelgelenk verschwenkbar. Die Kamera 14 und der Projektor 16 sind in dem Gehäuse 12 so angeordnet, dass die optischen Achsen 30 und 31 im Winkel von wenigen Grad zueinander verlaufen. Die Kamera 14 ist über eine elektrische Leitung 37 mit einem Monitor 38 verbunden. Der besondere Vorteil des Gerätes besteht darin, dass es miniaturisiert werden kann, ohne dabei die Qualität der dargestellten Bilder zu beeinträchtigen.

Die Fig.3 zeigt das Kameraobjektiv 1 und Projektorobjektiv 3, die auf einer Trägerplatte 52 angeordnet sind. Die Trägerplatte 52 ist auf dem Boden des Gehäuses 12 über Trägerplatte-Befestigungen 53 bis 59 festgehalten. Das Kameraobjektiv 1 besitzt ein feststehendes Objektivteil 62, während das Projektor-Objektiv ein feststehendes Objektivteil 61 besitzt.

Ferner sind Drehausgleiche 63 und 64 (um 350°) für Verschraubungen vorgesehen. An den Drehausgleich 63 schliesst sich eine Ojektivhalterung 86 an. Ein Pfeil 87 deutet die Verstellbarkeit des Objektives 65 an. Zwischen dieser Objektivhalterung 86 und einem Diaschacht 69 mit einer Grundplatte 68 und Aussparungen 67 ist eine Projektionsoptik 65 in Retrofokus-Anordnung, die das Abbild eines Diapositives zunächst auf die Grösse des CCDs in der Videokamera verkleinert. Der Diaschacht 69 trägt eine Drucktaste 70 für den Diaauswurf. Zwischen dem Diaschacht 69 und einer Linse mit einer konvexen Ausbildung 72 und einer konkaven Ausbildung 73 ist eine TV-Formatblende 71 angeordnet. Die Linse 72, 73, ein Wärmefilter 74 und eine Planarsphäre 75 dienen dazu, das Licht der Lampe zu kollimieren. Im Gesamtzusammenhang der Linsen mit dem dritten Objektiv 65 wird sichergestellt, dass der Leuchtfaden einer Lampe 77 keine Abbildungsstörungen hervorrufen kann. Die Lampe 77 der Lichtquelle 16 ist von einer Lampenfassung 78 gehalten, die ihrerseits über ein Halteblech 79 mit der Trägerplatte 52 verbunden ist. Die Rückseite der Lampe 77 besitzt einen Hohlspiegel 80, der als Reflektor dient. Das Halteblech 79 trägt ferner eine Platine 81 mit Mikroschalter für Lampenwechsel sowie einen Schalter-Lampenwechsler 82. Mit der Bezugsziffer 83 ist eine Lampen-Anzeige bezeichnet. An den Drehausgleich 64 schliesst sich eine CCD-Aufnahmeeinheit (Kamera) 66 an, die mit einer Kopplung für Brennweitenverstellung 84 zusammenarbeitet.

Die Einstellung des Kamera-Objektivs 1 und des Projektor-Objektivs 3 erfolgt synchron durch eine Motor-Getriebeeinrichtung 85 für IRIS/FOKUS/ZOOM. Die Kühlung erfolgt durch einen Lüfter 60.

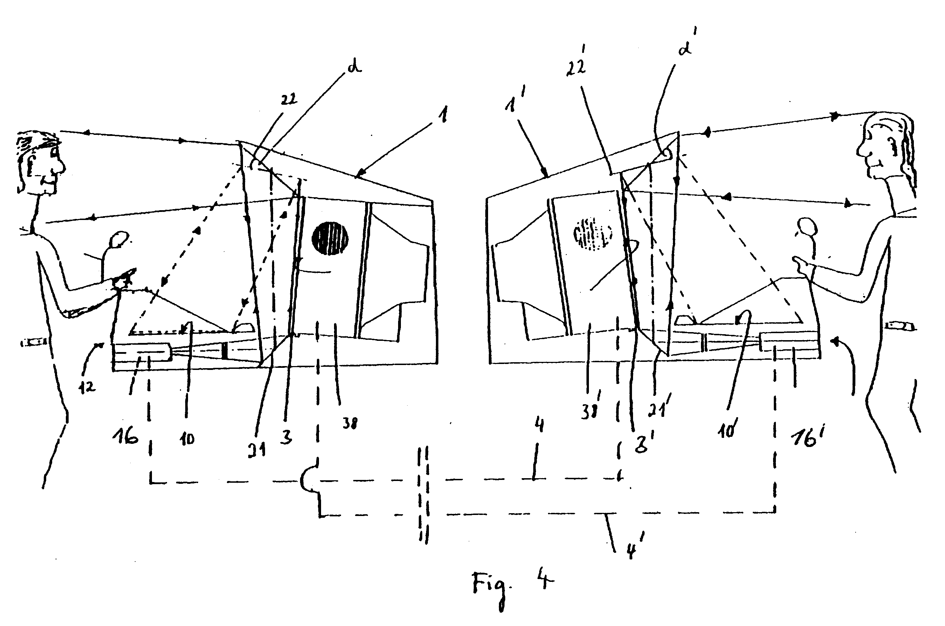

In Fig.4 sind zwei elektrisch miteinander verbundene Geräte dargestellt, und zwar in Form von Bildtelefonen. Jedes Bildtelefon besteht aus einem Gerät und einem Bildmonitor 38,38′; die Sprecheinrichtungen sind nicht dargestellt. Die Kamera 14 des ersten Gerätes ist mit dem Monitor 38′ des zweiten Gerätes und die Kamera 14′ des zweiten Gerätes ist mit dem Monitor 38 des ersten Gerätes verbunden. Bei Konferenzschaltungen können mehrere Bildtelefone gleichzeitig miteinander verbunden sein. Einer der wesentlichen Vorteile des dargestellten Bildtelefons ist, dass am Monitor 38,38′ nicht nur der Benutzer, sondern auch der auf einer Projektionsfläche 10 sich befindende Gegenstand oder ein dorthin projiziertes Bild darstellbar ist. Dabei reicht es, den Spiegel 22,22′ um seine Schwenkachse um einen Winkel d,d' zu verschwenken. Die Bedienung des Spiegels 22 kann mittels eines nicht dargestellten Manipulators erfolgen. Bevorzugt kann man den Spiegel 22,22′ auch so schwenken, dass er die Abbildung des Bildes des Monitors 38,38′ erlaubt. Wird ein Flachbildmonitor verwendet, dessen Dicke regelmässig nur wenige cm beträgt, dann kann dieser am Gehäuse 12 des Gerätes angelenkt sein, so dass er aus seiner unwirksamen (zusammengeklappten) Ruhestellung in seine wirksame (aufgeklappte) Arbeitsstellung verschwenkbar ist. Hierbei kann es zweckmässig sein, den Spiegel 22,22′ im Bereich der oberen Kante des Monitors anzulenken. Berücksichtigt man hierbei, dass die Masse der verwendeten Bauteile sehr gering sein können, dann ist es möglich, das Bildtelefon in einem kleinen Koffer unterzubringen. Der Monitor kann selbstverständlich auch an einen PC-Computer angeschlossen sein. Das Entscheidende bei dieser Variante der Erfindung ist, dass die Übertragung von Informationen sich nicht auf die Wiedergabe des Bildes des Benutzers beschränkt. Mit gleicher Präzision können alle auf der Projektionsfläche 10 bzw. auch sonstige im Raum befindlichen Gegenstände von der Kamera 14,14′ erfasst und im Monitor 38,38′ dargestellt werden. Bei ausreichendem Umgebungslicht kann auf die Anwendung der Lichtquelle bzw. des Projektors auch verzichtet werden. Der Spiegel 22,22′ kann auch als halbdurchlässiger Spiegel ausgebildet und direkt vor dem Monitor 38,38′ montiert sein.

Das erfindungsgemässe Gerät kann an der Videokamera auch einen PC-Anschluss - insbesondere für Rot-Grün-Blau-Farbtrennung aufweisen, so dass die einzelnen Komponenten getrennt verarbeitet werden können, wodurch die Bildqualität erhöht werden kann.

Eine 3-D-Verstellbarkeit der Spiegel beinhaltet auch ihre Höhenverstellung.

## Patentansprüche

1. Gerät für das Umwandeln von Bildern oder Abbildern in Videosignale, mit einer Videokamera (14) mit einem ersten Objektiv (1), und mit einer Lichtquelle (16), wobei der Videokamera ein erster Spiegel (21) zur Umlenkung eines ersten Strahlenganges zwischen einer Fläche (10) und dem ersten Objektiv (1) mit einem ersten Zentralstrahl (2) vorgeschaltet ist, dadurch gekennzeichnet, dass der Lichtquelle (16) mindestens ein zweites Objektiv (3) zur Fokussierung der Lichtstrahlen in einem zweiten Strahlengang von der Lichtquelle (16) zu der Fläche (10) mit einem zweiten Zentralstrahl (4) nachgeschaltet ist, und dass zwischen dem ersten Spiegel (21) und der Fläche (10) wenigstens ein zweiter Spiegel (22) angeordnet ist, wobei mindestens einer der beiden Spiegel (21,22) verstellbar gelagert ist, und wobei beide Spiegel (21,22) zur Lenkung der beiden Strahlengänge bzw. derer Zentralstrahlen (2,4) zwischen der Fläche (10) und dem ersten Objektiv (1) und zwischen dem zweiten Objektiv (3) und der Fläche (10) angeordnet sind.

2. Gerät für das Umwandeln von Bildern oder Abbildern in Videosignale, mit einer Videokamera (14) mit einem ersten Objektiv (1), und mit einer Lichtquelle (16), wobei der Videokamera ein erster Spiegel (21) zur Umlenkung eines ersten Strahlenganges zwischen einer Fläche (10) und dem ersten Objektiv (1) mit einem ersten Zentralstrahl (2) vorgeschaltet ist, dadurch gekennzeichnet, dass der Lichtquelle (16) mindestens ein zweites Objektiv (3) zur Fokussierung der Lichtstrahlen in einem zweiten Strahlengang von der Lichtquelle (16) zu der Fläche (10) mit einem zweiten Zentralstrahl (4) nachgeschaltet ist, und dass zwischen dem ersten Spiegel (21) und der Fläche (10) wenigstens ein zweiter Spiegel (22) angeordnet ist, wobei wenigstens einer der beiden Spiegel (21,22) geteilt ist, wobei wenigstens einer der beiden Spiegel (21,22) bzw. Teilspiegel verstellbar gelagert ist, wobei beide Spiegel (21,22) bzw. Teilspiegel (21a,b) zur Lenkung der beiden Strahlengänge bzw. derer Zentralstrahlen (2,4) zwischen der Fläche (10) und dem ersten Objektiv (1) und zwischen dem zweiten Objektiv (3) und der Fläche (10) angeordnet sind, und wobei jeder der beiden Zentralstrahlen je einem der Teilspiegel (21a,b) zuordenbar ist.

3. Gerät nach Anspruch 1 oder 2, dadurch gekennzeichnet, dass der erste und zweite Zentralstrahl (2,4) einander schneidend in einer Ebene liegen und ihr Schnittpunkt (5) im Bereich der Projektionsfläche (10) liegt, wobei ihr Winkel weniger als 25°, vorzugsweise weniger als 5°, insbesondere weniger als 2° beträgt, wobei das erste und zweite Objektiv (1,3) vorzugsweise identische optische Parameter aufweisen, und wobei vorzugsweise der Weg des zweiten Strahlenganges (4) vom zweiten Objektiv (3) bis zur Projektionsfläche (10) mindestens 0,9 Meter beträgt und letztere insbesondere als Projektionsfläche (10) ausgebildet ist.

4. Gerät nach Anspruch 1 oder 2, dadurch gekennzeichnet, dass zur Deckung des Aufnahmefeldes der Kamera mit dem projizierten Bild im zweiten Strahlengang zwischen der Lichtquelle (16) und dem zweiten Objektiv (3) eine Blende (71) und/oder ein drittes Objektiv (65), sowie vorzugsweise ein Lichtverstärker angeordnet ist.

5. Gerät nach einem der vorhergehenden Ansprüche, dadurch gekennzeichnet, dass das erste und zweite, vorzugsweise aber auch das dritte Objektiv (65) verstellbar fokussierend und/oder als - gegebenenfalls motorisch verstellbare - Zoomobjektive ausgebildet sind.

6. Gerät nach einem der vorhergehenden Ansprüche, dadurch gekennzeichnet, dass zumindest das erste und das zweite Objektiv (1,3) synchron - gegebenenfalls motorisch und/oder ferngesteuert - miteinander verstellbar sind, wobei die Synchronisiereinrichtung (6) vorzugsweise als Zahnradgetriebe mit einem Umlenkzahnrad ausgebildet ist.

7. Gerät nach einem der vorhergehenden Ansprüche,wobei der erste Spiegel (21) zweiteilig ausgebildet ist, dadurch gekennzeichnet, dass vorzugsweise der zweite Spiegel (22) und wenigstens einer der zwei Teile (21a,b) des ersten Spiegels - gegebenenfalls dreidimensional, insbesondere durch einen motorischen Stelltrieb und/oder über eine externe Fernsteuerung (7) - verstellbar ausgebildet sind.

8. Gerät nach einem der vorhergehenden Ansprüche, dadurch gekennzeichnet, dass zumindest das erste Objektiv (1) mit einer Autofokuseinrichtung und/oder einer Autoiriseinrichtung versehen ist, und/oder dass über den ersten und zweiten Spiegel (21,22) noch ein dritter Strahlengang (8) aus einer Mess- und/oder Steuereinheit für das Messen von bestimmten Zuständen im Bereich der Projektionsfläche (10) und/oder für das Steuern der Objektive (1,3) und/oder der Lichtquelle (16) und/oder der Videokamera (14) lenkbar ist.

9. Gerät nach einem der vorhergehenden Ansprüche, dadurch gekennzeichnet, dass für die Helligkeitssteuerung der Videokamera (14) eine Auswerte- und eine Steuereinheit für das Anpassen der Iriseinstellung an eine veränderte Objektiveinstellung vorgesehen sind, wobei der Steuereinheit vorzugsweise ein Rechner für das prozentuale Ermitteln und Beibehalten von bestimmten Über- oder Unterbelichtungswerten an der Projektionsfläche (10) vorgeschaltet ist, und/oder dass an der Videokamera (14) eine Mess- und Auswerteeinheit für das Erfassen von Überbelichtungen angeschlossen ist, die mit einem Triggermechanismus für das - gegebenenfalls verzögerte - Abschalten der Lichtquelle (16) oder für das automatische Verschwenken eines der Spiegel (22,21a,21b) verbunden ist.

10. Gerät nach einem der vorhergehenden Ansprüche, dadurch gekennzeichnet, dass die Videokamera (14), die Lichtquelle (16) und der erste Spiegel (21) bzw. die ersten Teilspiegel (21a,b) innerhalb eines einzigen Gehäuses (12) untergebracht sind, an dem - vorzugsweise mittig - der zweite Spiegel (22) - insbesondere an einem teleskopisch ausfahrbaren Arm (24) - gehalten ist, wobei die Projektionsfläche (10) an der Oberseite des Gehäuses (12) gegebenenfalls als abnehmbare und/oder austauschbare Platte mit zwei unterschiedlichen Reflexions-Oberflächen und/oder für die Aufnahme von färbigen Hintergrundtafeln ausgebildet ist.

11. Gerät nach einem der vorhergehenden Ansprüche, dadurch gekennzeichnet, dass in den zweiten Strahlengang zumindest ein durchleuchtbarer Bildträger, insbesondere ein Diapositiv, ein Kinofilm, oder ein Durchlicht-LCD, und/oder ein Filter, insbesondere ein Farb-, Polarisations- oder UVFilter, einschaltbar sind, oder dass die Lichtquelle (16) als Fernsehprojektor, insbesondere als Monitor, Leuchtbildschirm, Fernsehröhre oder CRT ausgebildet ist.

12. Gerät nach einem der vorhergehenden Ansprüche, dadurch gekennzeichnet, dass mindestens zwei mit Abstand zueinander angeordnete Geräte mit jeweils einem Monitor (38,38') vorgesehen sind, wobei die Kamera (14) des ersten Gerätes an den Monitor (38') des zweiten Gerätes und die Kamera (14') des zweiten Gerätes an den Monitor (38) des ersten Gerätes angeschlossen ist, und wobei die Geräte vorzugsweise mit einer Einrichtung für die Telefonie koppelbar sind, und wobei wenigstens der erste vorzugsweise aber auch der zweite Strahlengang auf das Gesicht eines Benutzers richtbar ist und gegebenenfalls der Monitor (38,38') im Sichtbereich des Gerätes angeordnet ist, und/oder auf die Bildfläche des Monitors (38) richtbar ist.

13. Gerät nach einem der vorhergehenden Ansprüche, dadurch gekennzeichnet, dass das Gerät mit einem Monitor (38) in einem gemeinsamen Gehäuse (12) untergebracht ist, wobei der zweite Spiegel (22) oder Teilspiegel vorzugsweise als teiltransparenter Spiegel ausgebildet und vor dem Monitor (38) montiert ist, und wobei im Fall der Ausbildung des Monitors (38) als Flachbildmonitor dieser und/oder der Spiegel (22) bzw. die Teilspiegel am Gehäuse (12) angelenkt und zwischen einer Arbeits- und einer Ruhestellung verschwenkbar ist.

14. Verfahren für das Umwandeln von Bildern oder Abbildern in Videosignale insbesondere nach Anspruch 1 oder 2, mit einer Videokamera (14) mit einem ersten Objektiv (1) und einem von einer Fläche (10) in dieses mündenden ersten Strahlengang mit einem zentralstrahl (2), der von einem ersten Spiegel (21) oder Teilspiegel (21a) umgelenkt wird, dadurch gekennzeichnet, dass dem ersten Strahlengang bzw. dem ersten Zentralstrahl (2) ein zweiter Strahlengang mit einem zweiten Zentralstrahl (4) zwischen einer Lichtquelle (16) und der Fläche (10), in einem Winkel von kleiner als 25 ° - vorzugsweise kleiner als 5° und insbesondere kleiner als 2° - zur Seite gestellt wird, der von den beiden Zentralstrahlen in der durch diese aufgespannten Ebene gebildet wird, wobei der zweite Zentralstrahl (4) ebenso wie der erste Zentralstrahl (2) über den ersten Spiegel (21) in einen zweiten Spiegel (22) und von dort auf eine beliebige, vorzugsweise als Projektionsfläche (10) ausgebildete Fläche (10) gelenkt wird, wobei sich die Zentralstrahlen (2,4) etwa im Bereich der Projektionsfläche (10) treffen, und dass das aufzuzeichnende Bild oder ein aufzuzeichnender Gegenstand in dem Bereich der Projektionsfläche (10) plaziert werden, der dem Schnittpunkt (5) der Mittelstrahlen (2,4) nahe liegt, wobei der Lichtquelle (16) ein zweiten Objektiv (3) nachgeschaltet ist und wobei die Fokusse der beiden Objektive (1,3) in Abhängigkeit von der Entfernung der Projektionsfläche (12) von dem zweiten Spiegel (22) bzw. von den Teilspiegeln oder in Abhängigkeit von der Länge der Strahlen (2,4) justiert werden.

15. Verfahren nach Anspruch 14, dadurch gekennzeichnet, dass in den zweiten Strahlengang ein Durchlichtbildträger eingeschaltet wird, dessen Bildinhalt auf die Projektionsfläche (10) projiziert wird, worauf diese Projektion, gegebenenfalls mit Ergänzungen, aufgezeichnet wird, und/oder dass der Querschnitt der Strahlengänge (2,4) in einem gegebenen Abstand von dem jeweils zugeordneten Objektiv (1,3) gleich gehalten wird, oder dass der Bildinhalt und/oder der zweite Strahlengang (4) vor dem zweiten Objektiv (3) auf einen Querschnitt bzw. ein Zwischenbild eingeschnürt wird, der bzw. das dem Querschnitt der Videoaufzeichnungseinheit, z.B. dem CCD, im selben Abstand von dem ersten Objektiv (1) entspricht.

## Claims

1. Apparatus for converting pictures or images into video signals, having a video camera (14) with a first lens (1) and having a light source (16), a first mirror (21) for deflecting a first beam between a surface (10) and the first lens (1) with a first central beam (2) being located in front of the video camera, characterized in that at least one second lens (3) for focusing the light rays into a second beam from the light source (16) to the surface (10) with a second central ray (4) is located after the light source (16), and that at least one second mirror is arranged between the first mirror (21) and the surface (10), at least one of the two mirrors (21, 22) being adjustably mounted and both mirrors (21, 22) being arranged for guiding the two beam paths or their central rays (2, 4) between the surface (10) and the first lens (1) and between the second lens (3) and the surface (10).

2. Apparatus for converting pictures or images into video signals, having a video camera (14) with a first lens (1) and having a light source (16), a first mirror (21) for deflecting a first beam between a surface (10) and the first lens (1) with a first central beam (2) being located in front of the video camera, characterized in that at least one second lens (3) for focusing the light beams into a second beam path from the light source (16) to the surface (10) with a second central ray (4) is arranged after the light source (16), and that at least one second mirror (22) is arranged between the first mirror (21) and the surface (10), at least one of the two mirrors (21, 22) being divided, at least one of the two mirrors (21, 22) or part mirrors being adjustably mounted, both mirrors (21, 22) or part mirrors (21a, 21b) being arranged for guiding the two beam paths or their central rays (2, 4) between the surface (10) and the first lens (1) and between the second lens (3) and the surface (10), and each of the two central rays being capable of being assigned to a part mirror (21a, b).

3. Apparatus according to Claim 1 or 2, characterized in that the first and second central rays (2, 4) lie in one plane and intersect one another, and their point of intersection (5) is in the region of the projection surface (10), their angle being less than 25°, preferably less than 5°, in particular less than 2°, the first and second lenses (1, 3) preferably having identical optical parameters and the distance travelled by the second beam (4) from the second lens (3) to the projection surface (10) preferably being at least 0.9 metre and the latter being in the form of, in particular, a projection surface (10).

4. Apparatus according to Claim 1 or 2, characterized in that, in order to cover the recording field of the camera with the projected image, an aperture (71) and/or a third lens (65), and preferably a light amplifier, are arranged in the second beam path between the light source (16) and the second lens (3).

5. Apparatus as claimed in any of the preceding Claims, characterized in that the first and second lenses, but preferably also the third lens (65), have adjustable focuses and/or are in the form of zoom lenses - which may be adjustable by a motor.

6. Apparatus according to any of the preceding Claims, characterized in that at least the first and the second lenses (1, 3) are synchronously adjustable with respect to one another, optionally by motor control and/or remote control, the synchronizing means (6) preferably being in the form of a gear having a direction-change gear wheel.

7. Apparatus according to any of the preceding Claims, the first mirror (21) having two parts, characterized in that preferably the second mirror (22) and at least one of the two parts (21a, b) of the first mirror being adjustable, if necessary in three-dimensions, in particular by means of a motor-operated adjusting gear and/or via an external remote control (7).

8. Apparatus according to any of the preceding Claims, characterized in that at least the first lens (1) is provided with an autofocus means and/or an autoiris means and/or that a third beam (8) from a measuring and/or control unit for measuring certain statuses in the region of the projection surface (10) and/or for controlling the lenses (1, 3) and/or the light source (16) and/or the video camera (14) can be deflected via the first and second mirrors (21, 22).

9. Apparatus according to any of the preceding Claims, characterized in that an evaluation unit and a control unit for adaptation of the iris setting to an altered lens setting are provided for brightness control of the video camera, a computer for calculating the percentage of certain overexposure and underexposure values at the projection surface (10) and for maintaining the said values at the said surface preferably being connected up-circuit of the control unit, and/or that a measuring and evaluation unit for determining overexposures is connected to the video camera (14), the said unit being connected to a trigger mechanism for - optionally delayed - switching off of the light source (16) or for automatic swivelling of one of the mirrors (22, 21a, 21b).

10. Apparatus according to any of the preceding Claims, characterized in that the video camera (14), the light source (16) and the first mirror (21) or the first part mirror (21a, b) are housed inside a single housing (12), on which the second mirror is held, preferably in the middle, in particular on a telescopic arm (24), the projection surface (10) being formed on the upper side of the housing (12), optionally as a removable and/or interchangeable plate having two different reflection surfaces and/or for holding coloured background panels.

11. Apparatus according to any of the preceding Claims, characterized in that at least one transparent image carrier, in particular a slide, a cine film or a transmitted-light LCD, and/or a filter, in particular a colour filter, polarization filter or UV filter, can be inserted into the second beam path, or that the light source (16) is in the form of a television projector, in particular a monitor, fluorescent screen, television tube or CRT.

12. Apparatus according to any of the preceding Claims, characterized in that at least two apparatuses arranged a distance apart and each having a monitor (38, 38') are provided, the camera (14) of the first apparatus being connected to the monitor (38') of the second apparatus and the camera (14') of the second apparatus being connected to the monitor (38) of the first apparatus, and the apparatuses preferably being capable of being coupled by a means for telephony, and at least the first, but preferably also the second, beam being capable of being directed at the face of a user and the monitor (38, 38') optionally being arranged so that it can be seen from the apparatus, and/or being capable of being directed at the image area of the monitor (38).

13. Apparatus according to any of the preceding Claims, characterized in that the apparatus is housed together with a monitor (38) in a common housing (12), the second mirror (22) or part mirror preferably being in the form of a partly transparent mirror and being mounted in front of the monitor (38), and, where the monitor (38) is in the form of a flat monitor, the latter and/or the mirror (22) or the part mirror being connected by an articulated joint to the housing (12) and being capable of being swivelled between an operating position and a rest position.

14. Method for converting pictures and images into video signals, in particular according to Claim 1 or 2, using a video camera (14) having a first lens (1) and a first beam path which enters this lens from a surface (10) and has a central ray (2) which is deflected by a first mirror (21) or part mirror (21a), characterized in that a second beam path having a second central ray (4) between a light source (16) and the surface (10) runs at an angle of less than 25° - preferably less than 5° and in particular less than 2° - alongside the first beam path or the first central ray (2), which angle is formed by the two central rays in the plane covered by said rays, the second central ray (4), like the first central ray (2) being deflected via the first mirror (21) into a second mirror (22) and from there to any desired surface (10) preferably in the form of a projection surface (10), the central rays (2, 4) meeting approximately in the region of the projection surface (10), and that the picture to be recorded or an article to be recorded is placed in the region of the projection surface (10) which is close to the point of intersection (5) of the central rays (2, 4), the light source (16) being located after a second lens (3) and the focuses of the two lenses (1, 3) being adjusted as a function of the distance between the projection surface (12) and the second mirror (22) or the part mirrors, or as a function of the length of the beams (2, 4).

15. Method according to Claim 14, characterized in that a transmitted-light image carrier is inserted in the second beam path, the image content of the said image carrier being projected onto the projection surface (10), after which this projection is recorded, optionally with additions, and/or that the cross-section of the beam paths (2, 4) is kept constant at a given distance from the associated lens (1, 3), or that the image content and/or the second beam path (4) is restricted, in front of the second lens (3), to a cross-section or an intermediate image, which cross-section or which intermediate image corresponds to the cross-section of the video recording unit, for example the CCD, at the same distance from the first lens (1).

## Revendications

1. Appareil pour convertir des images ou des représentations en signaux vidéo, comprenant une caméra vidéo (14) munie d'un premier objectif (1), et comprenant une source lumineuse (16), un premier miroir (21) étant monté en amont de la caméra vidéo pour dévier un premier trajet optique comprenant un premier rayon central (2) entre une surface (10) et le premier objectif (1), caractérisé par le fait qu'au moins un deuxième objectif (3) est monté en aval de la source lumineuse (16) pour focaliser les rayons lumineux sur un deuxième trajet optique allant de la source lumineuse (16) à la surface (10) et comprenant un deuxième rayon central (4), et par le fait qu'au moins un deuxième miroir (22) est disposé entre le premier miroir (21) et la surface (10), cependant que l'un au moins des deux miroirs (21, 22) est monté de façon à pouvoir être déplacé, et que les deux miroirs (21, 22), pour dévier les deux trajets optiques ou leurs rayons centraux (2, 4), respectivement, sont disposés entre la surface (10) et le premier objectif (1) et entre le deuxième objectif (3) et la surface (10).

2. Appareil pour convertir des images ou des représentations en signaux vidéo, comprenant une caméra vidéo (14) munie d'un premier objectif (1), et comprenant une source lumineuse (16), un premier miroir (21) étant monté en amont de la caméra vidéo pour dévier un premier trajet optique comprenant un premier rayon central (2) entre une surface (10) et le premier objectif (1), caractérisé par le fait qu'au moins un deuxième objectif (3) est monté en aval de la source lumineuse (16) pour focaliser les rayons lumineux sur un deuxième trajet optique allant de la source lumineuse (16) à la surface (10) et comprenant un deuxième rayon central (4), et par le fait qu'au moins un deuxième miroir (22) est disposé entre le premier miroir (21) et la surface (10), cependant que l'un au moins des deux miroirs (21, 22) est divisé, que l'un au moins des deux miroirs (21, 22) ou parties de miroirs, respectivement, est monté de façon à pouvoir être déplacé, que les deux miroirs (21, 22) ou parties de miroirs (21a,b), respectivement, en vue de dévier les deux trajets optiques ou leurs rayons centraux (2, 4), respectivement, sont disposés entre la surface (10) et le premier objectif (1) et entre le deuxième objectif (3) et la surface (10), et que l'une des parties de miroirs (21a,b) peut être associée à chaque fois à chacun des deux rayons centraux.

3. Appareil selon la revendication 1 ou 2, caractérisé par le fait que le premier et le deuxième rayon central (2, 4) sont situés dans un plan en se recoupant, et que leur point d'intersection (5) est situé dans la région de la surface de projection (10), leur angle étant inférieur à 25°, de préférence inférieur à 5°, et en particulier inférieur à 2°, le premier et le deuxième objectif (1, 3) présentant de préférence des paramètres optiques identiques, la longueur du deuxième trajet optique (4) depuis le deuxième objectif (3) jusqu'à la surface de projection (10) étant de préférence au moins égale à 0,9 mètre, et cette dernière étant réalisée en particulier sous la forme d'une surface de projection (10).

4. Appareil selon la revendication 1 ou 2, caractérisé par le fait que, pour recouvrir le champ de prise de vue de la caméra avec l'image projetée, on dispose sur le deuxième trajet optique, entre la source lumineuse (16) et le deuxième objectif (3), un cache (71) et/ou un troisième objectif (65), ainsi que de préférence un amplificateur de lumière.

5. Appareil selon l'une des revendications précédentes, caractérisé par le fait que le premier et le deuxième objectif, mais de préférence aussi le troisième (65), sont réalisés à focale variable et/ou sous la forme de zooms, le cas échéant avec un déplacement par moteur.

6. Appareil selon l'une des revendications précédentes, caractérisé par le fait qu'au moins le premier et le deuxième objectif (1, 3) peuvent être déplacés en synchronisme entre eux, le cas échéant au moyen d'un moteur et/ou d'une télécommande, le dispositif de synchronisation (6) étant réalisé de préférence sous la forme d'une transmission à roues dentées comprenant une roue dentée d'inversion.

7. Appareil selon l'une des revendications précédentes, dans lequel le premier miroir (21) est réalisé en deux parties, caractérisé par le fait que, de préférence, le deuxième miroir (22) et au moins l'une des deux parties (21a,b) du premier miroir sont réalisés de façon à pouvoir être déplacés - le cas échéant à trois dimensions, et en particulier grâce à une commande de réglage à moteur et/ou par l'intermédiaire d'une télécommande extérieure (7).

8. Appareil selon l'une des revendications précédentes, caractérisé par le fait qu'au moins le premier objectif (1) est muni d'un dispositif de focalisation automatique et/ou d'un dispositif de diaphragme automatique, et/ou par le fait qu'un troisième trajet optique (8) provenant d'une unité de mesure et/ou de commande peut encore être dévié par l'intermédiaire du premier et du deuxième miroir (21, 22) pour mesurer des états déterminés dans la région de la surface de projection (10) et/ou pour commander les objectifs (1, 3) et/ou la source lumineuse (16) et/ou la caméra vidéo (14).

9. Appareil selon l'une des revendications précédentes, caractérisé par le fait qu'il est prévu, pour la commande de la luminosité de la caméra vidéo (14), une unité d'exploitation et une unité de commande pour adapter la position du diaphragme à un réglage modifié de l'objectif, un calculateur étant de préférence monté en amont de l'unité de commande pour déterminer et conserver en pourcentage des valeurs déterminées de surexposition ou de sous-exposition sur la surface de projection (10), et/ou par le fait qu'est reliée à la caméra vidéo (14) une unité de mesure et d'exploitation qui est destinée à détecter les surexpositions et qui est reliée à un mécanisme de déclenchement pour couper la source lumineuse (16) - le cas échéant de manière temporisée - ou pour faire pivoter automatiquement l'un des miroirs (22, 21a, 21b).

10. Appareil selon l'une des revendications précédentes, caractérisé par le fait que la caméra vidéo (14), la source lumineuse (16) et le premier miroir (21) ou les premières parties de miroirs (21a,b), respectivement, sont logés à l'intérieur d'un boîtier unique (12) sur lequel le deuxième miroir (22) est maintenu - de préférence au centre, et en particulier sur un bras extensible de manière télescopique (24) -, la surface de projection (10) étant réalisée sur la face supérieure du boitier (12), le cas échéant sous la forme d'une plaque amovible et/ou interchangeable comprenant deux surfaces réfléchissantes différentes et/ou réalisée de façon à recevoir des fonds en couleurs.

11. Appareil selon l'une des revendications précédentes, caractérisé par le fait que l'on peut interposer sur le deuxième trajet optique au moins un support d'image transparent, et en particulier une diapositive, un film cinématographique ou un affichage à cristaux liquides transparent et/ou un filtre, et en particulier un filtre coloré, un filtre polariseur ou un filtre à ultraviolets, ou par le fait que la source lumineuse (16) est réalisée sous la forme d'un projecteur de télévision, et en particulier d'un moniteur, d'un écran luminescent, d'un tube récepteur de télévision ou d'un tube cathodique.

12. Appareil selon l'une des revendications précédentes, caractérisé par le fait qu'au moins deux appareils disposés à distance l'un de l'autre sont munis chacun d'un moniteur (38, 38'), cependant que la caméra (14) du premier appareil est reliée au moniteur (38') du deuxième appareil et que la caméra (14') du deuxième appareil est reliée au moniteur (38) du premier appareil, que les appareils peuvent être accouplés de préférence à un dispositif de téléphonie, et qu'au moins le premier trajet optique, mais de préférence aussi le deuxième, peut être dirigé vers le visage d'un utilisateur, le moniteur (38, 38') étant disposé le cas échéant dans le champ de vision de l'appareil, et/ou qu'il peut être dirigé sur la surface de l'image du moniteur (38).

13. Appareil selon l'une des revendications précédentes, caractérisé par le fait que l'appareil est logé avec un moniteur (38) dans un boîtier commun (12), cependant que le deuxième miroir (22) ou la deuxième partie de miroir est réalisée de préférence sous la forme d'un miroir semi-transparent et montée devant le moniteur (38), et que, dans le cas où le moniteur (38) est réalisé sous la forme d'un moniteur à image plate, celui-ci et/ou le miroir (22) ou la partie de miroir, respectivement, est articulée sur le boîtier (12) et peut pivoter entre une position de travail et une position de repos.

14. Procédé pour convertir des images ou des représentations en signaux vidéo, en particulier selon la revendication 1 ou 2, comprenant une caméra vidéo (14) munie d'un premier objectif (1), et comprenant un premier trajet optique qui débouche dans celui-ci depuis une surface (10) et qui présente un rayon central (2) dévié par un premier miroir (21) ou par une première partie de miroir (21a), caractérisé par le fait que l'on juxtapose au premier trajet optique ou au premier rayon central (2), respectivement, sous un angle inférieur à 25° - de préférence inférieur à 5°, et en particulier inférieur à 2° -, et vers le côté qui est formé par les deux rayons centraux dans le plan défini par ceux-ci, un deuxième trajet optique qui comprend un deuxième rayon central (4) entre une source lumineuse (16) et la surface (10) cependant que le deuxième rayon central (4), tout comme le premier rayon central (2), est dévié par l'intermédiaire du premier miroir (21) sur un deuxième miroir (22), et de là sur une surface quelconque (10) qui est réalisée de préférence sous la forme d'une surface de projection (10), et que les rayons centraux (2, 4) se rencontrent à peu près dans la région de la surface de projection (10), et par le fait que l'image à enregistrer ou un objet à enregistrer est placé dans la région de la surface de projection (10) qui est voisine du point d'intersection (5) des rayons centraux (2, 4), cependant qu'un deuxième objectif (3) est monté en aval de la source lumineuse (16), et que les foyers des deux objectifs (1, 3) sont ajustés en fonction de l'éloignement de la surface de projection (10) par rapport au deuxième miroir (22) ou aux parties de miroirs, respectivement, ou en fonction de la longueur des rayons (2, 4).

15. Procédé selon la revendication 14, caractérisé par le fait que l'on insère dans le deuxième trajet optique un support d'image transparent dont l'image contenue est projetée sur la surface de projection (10), après quoi cette projection est enregistrée, le cas échéant après qu'on l'a complétée, et/ou par le fait que la section transversale des trajets optiques (2, 4) est maintenue égale à une distance donnée de l'objectif (1, 3) qui est associé à chacun d'eux, ou par le fait que le contenu de l'image et/ou que le deuxième trajet optique (4) est réduit avant le deuxième objectif (3) jusqu'à une section transversale ou à une image intermédiaire, respectivement, qui correspond à la section transversale de l'unité d'enregistrement vidéo, par exemple au dispositif photosensible, à la même distance du premier objectif (1).
